# EUROPÄISCHE PATENTSCHRIFT

(11) **EP 2 898 277 B1**
(45) Veröffentlichungstag und Bekanntmachung des Hinweises auf die Patenterteilung: **11.01.2017**
(21) Anmeldenummer: 13765651.8
(22) Anmeldetag: 18.09.2013
(51) Int. Cl.: F28D 9/00

(54) **PLATTENWÄRMETAUSCHER MIT EINEM INSBESONDERE T-FÖRMIGEN VERBINDUNGSELEMENT**
PLATE HEAT EXCHANGER HAVING AN IN PARTICULAR T-SHAPED CONNECTING ELEMENT
ÉCHANGEUR THERMIQUE À PLAQUES COMPRENANT UN ÉLÉMENT DE LIAISON EN PARTICULIER EN FORME DE TÉ

(30) Priorität: 18.09.2012 EP 12006546
(43) Veröffentlichungstag der Anmeldung: 29.07.2015
(73) Patentinhaber: Linde Aktiengesellschaft, 80331 München (DE)
(72) Erfinder: STÖCKL, Bernhard, 83342 Tacherting (DE); PILZWEGER, Andrea, 84489 Burghausen (DE)
(74) Vertreter: Meilinger, Claudia Sabine
(86) Internationale Anmeldenummer: PCT/EP2013/002808
(87) Internationale Veröffentlichungsnummer: WO 2014/044386

(56) Entgegenhaltungen:
- EP-A1- 1 452 817
- DE-A1-102008 052 875
- DE-A1-102009 033 661
- FR-A1- 2 923 594
- JP-A- 61 191 879

## Beschreibung

Die Erfindung betrifft einen Plattenwärmetauscher gemäß dem Oberbegriff des Anspruchs 1 und ein Verfahren zur Nachrüstung oder Reparatur eines Plattenwärmeaustauschers gemäß dem Oberbegriff des Anspruchs 15.

Eine derartiger Plattenwärmetauscher weist zumindest ein erstes und ein zweites Plattenwärmetauschermodul zum Führen von Prozessströmen auf, wobei jene Module über ein Verbindungsmittel miteinander verbunden sind, wobei die beiden Plattenwärmetauschermodule jeweils eine insbesondere entlang der Vertikalen erstreckte erste Außenseite aufweisen, wobei diese beiden Außenseiten einander zugewandt sind und insbesondere aneinander anliegen, also ggf. Kontaktflächen der beiden Plattenwärmetauschermodule bilden. Des Weiteren weisen die beiden Plattenwärmetauschermodule jeweils eine von der ersten Außenseite abgehende (insbesondere entlang der Vertikalen erstreckte) zweite Außenseite auf, wobei die beiden zweiten Außenseiten insbesondere in einer gemeinsamen Erstreckungsebene liegen.

Aus der EP 1 452 817 A1 ist ein Plattenwärmetauscher bekannt, der zwei Wärmetauscherblöcke (Module) umfasst. Die Wärmetauscherblöcke sind über ein Blech oder eine Leiste an ihren einander zugewandten Außenseiten beabstandet miteinander verbunden.

Während des Betriebes, insbesondere beim An- und Abfahren einer derartigen verfahrenstechnischen Anlage, können die besagten Plattenwärmetauschermodule unterschiedlichen Temperaturen ausgesetzt sein bzw. unterschiedliche Temperaturen aufweisen. Da zum Verbinden solcher Plattenwärmetauschermodule über die besagten ersten Außenseiten für gewöhnlich Schweißverbindungen eingesetzt werden, können durch die besagten Temperaturdifferenzen insbesondere im Bereich der Modulverbindungsnähte (Schweißnähte) unzulässig hohe Materialspannungen induziert werden, die zu einer Zerstörung der Verbindung bzw. der aneinander angrenzenden Plattenwärmetauschermodule führen können.

Hiervon ausgehend liegt daher der vorliegenden Erfindung das Problem zugrunde, einen (modularen) Plattenwärmetauscher der eingangs genannten Art bereitzustellen, die hinsichtlich der vorgenannten Nachteile verbessert ist. Zudem wird ein Verfahren zur Nachrüstung oder Reparatur bereits bestehender, insbesondere bereits in Betrieb genommener Plattenwärmetauscher bereitgestellt, um Plattenwärmetauscher hinsichtlich der vorgenannten Nachteile zu verbessern.

Dieses Problem wird durch eine Modulanordnung mit den Merkmalen des Anspruchs 1 und einem Verfahren gemäß Anspruch 15 gelöst.

Demnach wird ein Plattenwärmetauscher bereitgestellt, mit: einem ersten und einem zweiten Plattenwärmetauschermodul, die über ein Verbindungsmittel miteinander verbunden sind, wobei die beiden Plattenwärmetauschermodule jeweils eine erste Außenseite aufweisen, wobei die beiden Außenseiten einander zugewandt sind, insbesondere aneinander anliegen, und wobei die beiden Plattenwärmetauschermodule jeweils eine von der ersten Außenseite abgehende zweite Außenseite aufweisen. Erfindungsgemäß ist vorgesehen, dass das Verbindungsmittel zumindest ein an der zweiten Außenseite des ersten Plattenwärmetauschermoduls befestigtes erstes Verbindungselement sowie ein an der zweiten Außenseite des zweiten Plattenwärmetauschermoduls befestigtes zweites Verbindungselement aufweist, wobei das erste Verbindungselement dazu ausgebildet ist, das zweite Verbindungselement zu hintergreifen, sodass die beiden Plattenwärmetauschermodule normal zu den ersten Außenseiten aneinander festgelegt sind (insbesondere aufgrund der Lage des ersten Verbindungselementes bezüglich des zweiten Verbindungselementes und der Form der Verbindungselemente) und eine seitliche Ausgleichsbewegung zwischen den Plattenwärmetauschermodulen zum Ausgleich von Wärmespannungen möglich ist. Dies bedeutet, dass laterale Ausgleichsbewegung zum Relaxieren etwaiger Temperaturspannungen nicht behindert werden.

Im Rahmen der vorliegenden Erfindung wird auch ein Verfahren zum Nachrüsten oder Reparieren eines Plattenwärmetauschers bereitgestellt, der ein erstes und ein zweites Plattenwärmetauschermodul aufweist, wobei die beiden Plattenwärmetauschermodule jeweils eine erste Außenseite aufweisen, wobei die beiden Außenseiten einander zugewandt sind, insbesondere aneinander anliegen, und wobei die beiden Plattenwärmetauschermodule jeweils eine von der ersten Außenseite abgehende zweite Außenseite aufweisen. Erfindungsgemäß wird an der zweiten Außenseite des ersten Plattenwärmetauschermoduls ein erstes Verbindungselement eines Verbindungsmittels sowie an der zweiten Außenseite des zweiten Plattenwärmetauschermoduls ein zweites Verbindungselement des Verbindungsmittels angebracht, wobei das erste Verbindungselement das zweite Verbindungselement hintergreift, sodass die beiden Plattenwärmetauschermodule normal zu ihren ersten Außenflächen aneinander festgelegt sind und eine seitliche Ausgleichsbewegung zwischen den Plattenwärmetauschermodulen zum Ausgleich von Wärmespannungen möglich ist. Dieses Verfahren wird vorzugsweise für Plattenwärmetauscher angewandt, bei denen die Verbindung, in der Regel eine Schweißverbindung über metallische Randleisten, zwischen den Modulen durch einen bereits erfolgten Betrieb geschwächt, teilweise oder ganz zerstört ist. Mit dem erfindungsgemäßen Verfahren kann eine sichere und dauerhafte Verbindung zwischen den Modulen geschaffen werden.

Die besagten Plattenwärmetauschermodule bestehen bevorzugt aus einer Vielzahl stapelförmig übereinander angeordneter wellenförmiger Strukturen (sogenannte Lamellen oder Fins), die durch Platten (Trennbleche) voneinander getrennt sind. Hierdurch wird eine Vielzahl an parallelen Wärmeaustauschpassagen gebildet, so dass zwei in benachbarten Wärmeaustauschpassagen geführte Prozessmedien, die durch die von dem jeweiligen Fin und den angrenzenden Platten begrenzten Kanäle der jeweiligen Wärmeaustauschpassage strömen, miteinander in einen indirekten Wärmeaustausch treten können. Die einzelnen Wärmeaustauschpassagen (Fins) sind durch sogenannte Sidebars nach außen hin abgeschlossen. Die beiden äußersten Platten eines solchen Plattenwärmetauschermoduls, die die beiden äußersten Wärmeaustauschpassagen des Plattenwärmetauschermoduls nach außen hin begrenzen, werden als Deckplatten (Deckbleche) bezeichnet.

Vorzugsweise werden derartige Plattenwärmetauscher aus Aluminium hartgelötet. Die einzelnen Wärmeaustauschpassagen mit den Fins, Platten, Sidebars und Deckplatten sowie ggf. weiteren Komponenten, die z.B. zum Verteilen der Prozessmedien auf die einzelnen Passagen dienen (z.B. Verteilerfins) bzw. ein Zusammenführen des jeweiligen Prozessmediums nach dem Durchlaufen der zugeordneten Wärmeaustauschpassage(n) ermöglichen, werden aufeinander gestapelt, mit Lot versehen und in einem Ofen hartgelötet. Auf den dadurch entstanden Block werden dann Header und Stutzen aufgeschweißt, über die die einzelnen Wärmeaustauschpassagen mit den Prozessmedien beschickt werden können bzw. über die Prozessmedien aus dem Plattenwärmetauschermodul gesammelt und abgezogen werden können.

Durch das vorgenannte Herstellungsverfahren wird durch die Größe und Geometrie des verwendeten Lötofens auch die maximale Größe eines derartigen Plattenwärmetauscherblockes bzw. -moduls vorgegeben. Sofern die Prozesserfordernisse größere Wärmeaustauschflächen und somit größere Wärmetauscherblöcke erfordern, können zwei oder mehrere Plattenwärmetauschermodule der vorgenannten Art miteinander verschaltet werden. Unter einem Plattenwärmetauschermodul wird daher im Rahmen dieser Anmeldung insbesondere auch ein Wärmetauscherblock verstanden, der in einem Lötofen der oben beschrieben Art hergestellt wird.

In einer Ausführungsform der Erfindung ist vorgesehen, dass das erste Verbindungselement einen ersten Schenkel aufweist, der entlang einer ersten Erstreckungsrichtung, die vorzugsweise senkrecht zur ersten Außenseite des ersten Plattenwärmetauschermodules orientiert ist, über die erste Außenseite des ersten Plattenwärmetauschermoduls hinausragt, so dass der erste Schenkel abschnittsweise vor der zweiten Außenseite des zweiten Plattenwärmetauschermoduls zu liegen kommt und bevorzugt an dieser anliegt. Analog ragt bevorzugt das zweite Verbindungselement über die erste Außenseite des zweiten Plattenwärmetauschermoduls hinaus und kommt auf der zweiten Außenseite des ersten Plattenwärmetauschermoduls zu liegen bzw. liegt an dieser an. Durch diese wechselseitige Überlappung können die beiden Plattenwärmetauschermodule grundsätzlich auch normal zu den zweiten Außenseiten zueinander arretiert werden.

Weiterhin ist bevorzugt vorgesehen, dass das erste Verbindungselement einen zweiten Schenkel aufweist, der vor der zweiten Außenseite des zweiten Plattenwärmetauschermoduls zu liegen kommt und insbesondere an dieser anliegt, und der entlang einer quer zur ersten Erstreckungsrichtung orientierten zweiten Erstreckungsrichtung vom ersten Schenkel abgeht und mit einem freien Endbereich das zweite Verbindungselement hintergreift, so dass sich die beiden Plattenwärmetauschermodule, z.B. zum Ausgleich von Wärmespannungen, entlang der zweiten Erstreckungsrichtung relativ zueinander bewegen können, jedoch entlang einer Normalen zu den ersten Außenseiten (d.h. entlang der ersten Erstreckungsrichtung) aneinander festgelegt sind. Das Verbindungsmittel verhindert so ein Aufspreizen der beiden ersten Außenseiten im Bereich des Verbindungsmittels.

Bevorzugt ist weiterhin vorgesehen, dass das erste Verbindungselement einen dritten Schenkel aufweist, der entgegen gesetzt zum zweiten Schenkel vom ersten Schenkel abgeht und vor der zweiten Außenseite des zweiten Plattenwärmetauschermoduls zu liegen kommt und insbesondere an dieser anliegt, wobei der dritte Schenkel mit einem freien Endbereich ein drittes Verbindungselement des Verbindungsmittels hintergreift, wobei jenes dritte Verbindungselement an der zweiten Außenseite des zweiten Plattenwärmetauschermoduls befestigt ist, und zwar bevorzugt analog zum zweiten Verbindungsmittel.

Vorzugsweise ist das erste Verbindungselement T-förmig ausgebildet, d.h., der zweite Schenkel und der dritte Schenkel fluchten entlang der zweiten Erstreckungsrichtung miteinander, so dass die drei Schenkel in der besagten T-förmigen Konfiguration zueinander angeordnet sind.

Weiterhin ist bevorzugt vorgesehen, dass der erste Schenkel entlang der zweiten Erstreckungsrichtung zwischen dem zweiten und dem dritten Verbindungselement angeordnet ist, wobei der erste Schenkel entlang der zweiten Erstreckungsrichtung zu dem zweiten und dem dritten Verbindungselement jeweils beabstandet ist, so dass das zweite und das dritte Verbindungselement je einen Anschlag für den ersten Schenkel des ersten Verbindungselementes definieren, die eine Bewegung der beiden Plattenwärmetauschermodule relativ zueinander entlang der zweiten Erstreckungsrichtung begrenzen. Mit anderen Worten ist also der erste Schenkel des ersten Verbindungselementes mit Spiel zwischen den beiden anderen Verbindungselementen angeordnet, so dass eine Bewegung der beiden Plattenwärmetauschermodule relativ zueinander entlang der zweiten Erstreckungsrichtung innerhalb eines gewissen Rahmens möglich ist, und nicht durch das zweite bzw. dritte Verbindungselement verhindert wird.

In einer alternativen Ausführungsform der Erfindung ist vorgesehen, dass das erste Verbindungselement einen dritten Schenkel aufweist, der von einem Endbereich des zweiten Schenkels abgeht, so dass das erste Verbindungselement insbesondere U-förmig ausgebildet ist und bevorzugt das zweite Verbindungselement umgreift (das dritte Verbindungselement ist hier nicht vorhanden). Bevorzugt ist dabei vorgesehen, dass der besagte dritte Schenkel parallel zum ersten Schenkel verläuft. Vorzugsweise steht jener dritte Schenkel entlang der ersten Erstreckungsrichtung über die erste Außenseite des ersten Plattenwärmetauschermoduls hinaus, so dass der dritte Schenkel abschnittsweise vor der zweiten Außenseite des zweiten Plattenwärmetauschermoduls zu liegen kommt und insbesondere an dieser anliegt. Vorzugsweise ist das erste Verbindungselement über einen Endbereich des ersten Schenkels sowie über einen Endbereich des dritten Schenkels an der zweiten Außenseite des ersten Plattenwärmetauschermoduls befestigt, insbesondere über eine Schweißverbindung.

Damit eine gewisse Relativbewegung der beiden Plattenwärmetauschermodule zueinander entlang der zweiten Erstreckungsrichtung möglich ist, ist das zweite Verbindungselement entlang der zweiten Erstreckungsrichtung zwischen dem ersten und dem dritten Schenkel des ersten Verbindungselementes angeordnet, wobei das zweite Verbindungselement entlang der zweiten Erstreckungsrichtung zu dem ersten und dem dritten Schenkel beabstandet angeordnet ist, so dass der erste und der dritte Schenkel je einen Anschlag für das zweite Verbindungselement definieren, wobei jene Anschläge eine Bewegung der beiden Plattenwärmetauschermodule relativ zueinander entlang der zweiten Erstreckungsrichtung begrenzen.

In einer weiteren alternativen Ausführungsform ist vorgesehen, dass das erste Verbindungselement L-förmig ausgebildet ist (also lediglich den ersten und den zweiten Schenkel aufweist), wobei insbesondere das erste Verbindungselement über einen Endbereich des ersten Schenkels des ersten Verbindungselementes an der zweiten Außenseite des ersten Plattenwärmetauschermoduls befestigt ist. Vorzugsweise ist weiterhin vorgesehen, dass das zweite Verbindungselement einen ersten Schenkel aufweist, der entgegen der ersten Erstreckungsrichtung, über die erste Außenseite des zweiten Plattenwärmetauschermoduls hinaus steht, so dass der erste Schenkel des zweiten Verbindungselementes abschnittsweise vor der zweiten Außenseite des ersten Plattenwärmetauschermoduls zu liegen kommt und insbesondere an dieser anliegt, wobei bevorzugt das zweite Verbindungselement über einen Endbereich der ersten Schenkels des zweiten Verbindungselementes an der zweiten Außenseite des zweiten Plattenwärmetauschermoduls befestigt ist, und zwar vorzugsweise mittels einer Schweißverbindung. Bevorzugt weist das zweite Verbindungselement die gleiche Form wie das erste Verbindungselement auf, ist also ebenfalls bevorzugt L-förmig gestaltet, so dass die beiden Verbindungselemente sich gegenseitig hintergreifen können. Hierbei weist das zweite Verbindungselement zum Hintergreifen des ersten Verbindungselementes ebenfalls einen vom ersten Schenkel abgehenden zweiten Schenkel auf, der vorzugsweise vor der zweiten Außenseite des ersten Plattenwärmetauschermoduls zu liegen kommt und insbesondere an dieser anliegt. Dabei geht jener zweite Schenkel des zweiten Verbindungselements bevorzugt entlang der zweiten Erstreckungsrichtung vom ersten Schenkel des zweiten Verbindungselementes ab und erstreckt sich hinter das erste Verbindungselement, nämlich bevorzugt hinter jenen Endbereich des ersten Schenkels des ersten Verbindungselementes, über den das erste Verbindungselement an der zweiten Außenseite des ersten Plattenwärmetauschermoduls befestigt ist, so dass sich insbesondere die beiden Plattenwärmetauschermodule entlang der zweiten Erstreckungsrichtung relativ zueinander bewegen können und normal zu den ersten Außenseiten aneinander festgelegt sind. Vorzugsweise ist der erste Schenkel des ersten Verbindungselementes entlang der zweiten Erstreckungsrichtung zu dem ersten Schenkel des zweiten Verbindungselementes beabstandet angeordnet, so dass die beiden Plattenwärmetauschermodule sich relativ zueinander entlang der zweiten Erstreckungsrichtung (begrenzt) bewegen können.

Bevorzugt sind die besagten Verbindungselemente in den einzelnen Ausführungsformen aus einem Metall, insbesondere aus Aluminium oder Stahl, gefertigt.

Bevorzugt ist in den einzelnen Ausführungsformen dabei das erste Verbindungselement über eine Schweißverbindung an der zweiten Außenseite des ersten Plattenwärmetauschermoduls befestigt, und zwar bevorzugt über einen Endbereich des ersten Schenkels und ggf. über einen Endbereich eines etwaigen dritten Schenkels.

Bevorzugt sind auch das zweite und das dritte Verbindungselement jeweils über einen Endbereich (eines ersten Schenkels) mittels einer Schweißverbindung mit der zweiten Außenseite des zweiten Plattenwärmetauschermoduls verbunden.

Weiterhin sind bevorzugt in den einzelnen Ausführungsformen die Schenkel eines Verbindungselementes einstückig miteinander verbunden bzw. einstückig aneinander angeformt.

Besonders bevorzugt bilden die ersten Außenseiten des ersten und zweiten Plattenwärmetauschermoduls jeweils eine Oberfläche einer (äußersten) Deckplatte des ersten bzw. zweiten Plattenwärmetauschermoduls.

Bevorzugt sind weiterhin die beiden Plattenwärmetauschermodule über einen gemeinsamen Header miteinander verbunden, über den die beiden Plattenwärmetauschermodule mit zumindest einem Prozessmedium beschickt werden können. Das besagte Verbindungsmittel dient dann insbesondere dazu, ein Aufspreizen der Verbindung zwischen den beiden ersten Außenseiten zu verhindern, die z.B. entstehen kann, wenn kalte Medien durch den Header strömen und es daher zu einer Schrumpfung des Headers kommt, die die beiden ersten Außenseiten insbesondere an einer dem Header gegenüberliegenden Seite auseinanderzieht. Darüber hinaus dient diese Verbindung aber auch der generellen Stabilität (Vermeiden des Aufspreizens) des modularen Plattenwärmetauschers bei der Auflagerung im Betrieb oder auch schon für das Handling in der Fertigungsstätte bzw. beim Transport, bei der die Verbindung über nur einen oder wenige gemeinsame Header an einem Ende der Plattenwärmetauschermodule nicht ausreichen würde.

Das vorstehende Verbindungsmittel ist bevorzugt auch in der gleichen Weise auf zwei (sich in einer Ebene erstreckenden) dritten Außenseiten der besagten Plattenwärmetauschermodule angeordnet bzw. vorgesehen, die parallel zu den beiden zweiten Außenseiten verlaufen.

Da die einzelnen Verbindungsmittel stets von dem jeweils zugeordneten Plattenwärmetauschermodul an dem sie festgelegt sind, abragen, überlappen sich die Plattenwärmetauschermodule mit jenen Verbindungselementen wechselseitig (Verschränkung). Damit ist ebenfalls eine Arretierung der Plattenwärmetauschermodule zueinander in einer zur ersten und zweiten Erstreckungsrichtung orthogonalen dritten Erstreckungsrichtung (Z-Richtung) gewährleistet.

Das Verbindungsmittel ist des Weiteren nicht auf Plattenwärmetauschermodule beschränkt, sondern kann mit Vorteil auch bei anderen verfahrenstechnischen Apparaten (Modulen) eingesetzt werden, die insbesondere deutlichen Temperaturunterschieden ausgesetzt sein können.

Weitere Einzelheiten und Vorteile der Erfindung sollen durch die nachfolgende Figurenbeschreibung eines Ausführungsbeispiels anhand der Figur erläutert werden.

Es zeigen:
- Fig. 1: eine schematische Ansicht eines erfindungsgemäßen Plattenwärmetauschers, mit zwei Plattenwärmetauschermodulen, die über ein Verbindungsmittel miteinander verbunden sind, das insbesondere zum Verhindern einer Aufspreizung der zwischen den beiden Plattenwärmetauschermodulen gebildeten Kontaktfläche dient, wobei das zweite Plattenwärmetauschermodul zur Andeutung der Position der Platten, Fins, Sidebars und Deckplatten der Plattenwärmetauschermodule teilweise aufgerissen dargestellt ist;
- Fig. 2: eine schematische Ansicht zweier Plattenwärmetauschermodule mit gemeinsamen Headern und einem Verbindungsmittel nach Art der Figur 1; und
- Fig. 3: zwei alternative Verbindungsmittel.

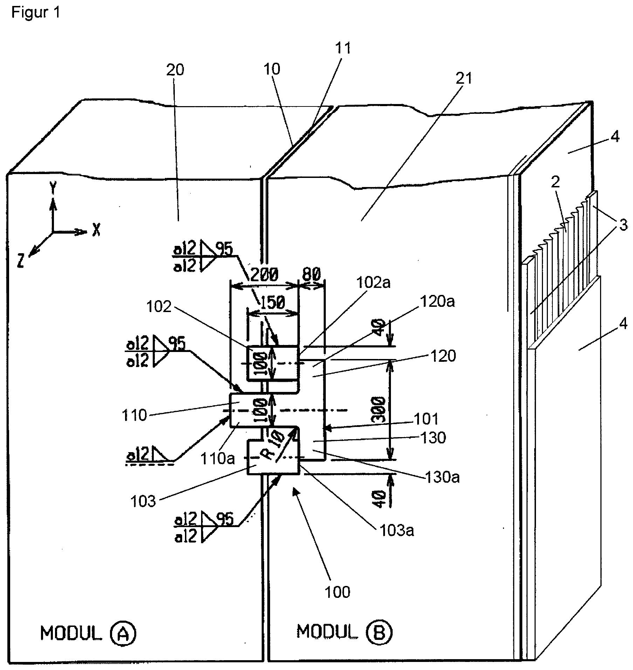

Fig. 1 zeigt eine schematische, perspektivische Ansicht eines erfindungsgemäßen Plattenwärmetauschers mit einem ersten Plattenwärmetauschermodul A und einem zweiten Plattenwärmetauschermodul B.

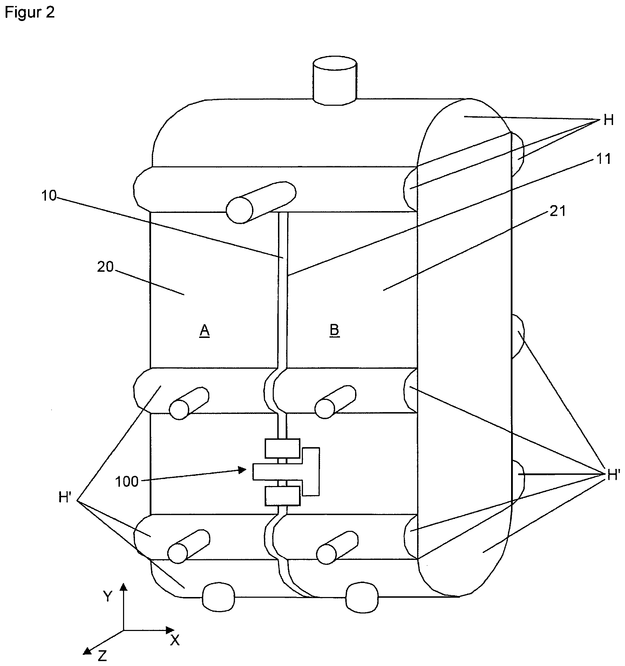

Ein derartiges Plattenwärmetauschermodul A, B weist mehrere Lamellen (Fins) 2 auf, die sich jeweils entlang der Z-Y-Ebene erstrecken und jeweils zwischen zwei entlang jener Ebene erstreckten Platten 4 des Plattenwärmetauschermoduls A, B angeordnet sind. Zu den Seiten hin werden die Fins 2 von Sidebars (Seitenleisten) 3 begrenzt, die mit den jeweils benachbarten Platten 4 verlötet sind. Hierdurch weist der jeweilige Plattenwärmetauscher A, B eine Vielzahl an parallelen Wärmeaustauschpassagen auf, in denen Prozessmedien strömen können und indirekt Wärme auf in benachbarten Wärmeaustauschpassagen geführten Prozessmedien übertragen können. Die einzelnen Wärmeaustauschpassagen können über Header H, H' (vgl. Figur 2) mit Prozessmedien beschickt werden. Die jeweils äußersten Platten 4 eines Plattenwärmetauschermoduls A, B werden auch als Deckplatten bezeichnet, wobei vorliegend die beiden ersten Außenseiten 10, 11 durch eine solche Deckplatte des ersten bzw. des zweiten Plattenwärmetauschermoduls A, B gebildet werden. Die beiden Deckplatten bzw. ersten Außenseiten 10, 11 liegen vorzugsweise aneinander an, bilden also jeweils eine Kontaktfläche zum benachbarten Plattenwärmetauschermodul A bzw. B. Es ist jedoch auch möglich, dass die beiden Plattenwärmetauschermodule A, B normal zu ihren beiden ersten Außenseiten 10,11, die sich jeweils entlang der Z-Y-Ebene erstrecken, eine geringe Beabstandung aufweisen können. Senkrecht zu den beiden ersten Außenseiten 10,11 geht jeweils eine zweite Außenseite 20, 21 von der jeweiligen ersten Außenseite 10, 11 ab, wobei sich jene zweiten Außenseiten 20, 21 jeweils entlang der Y-X-Ebene erstrecken und dabei eine gemeinsame Erstreckungsebene aufweisen. Bezogen auf einen bestimmungsgemäß angeordneten Zustand der beiden Plattenwärmetauschermodule A, B erstrecken sich die ersten und zweiten Außenseiten 10, 11, 20, 21 vorzugsweise entlang der Vertikalen Y.

Üblicherweise werden zum Verbinden zweier derartiger Plattenwärmetauschermodule A, B Schweißnähte verwendet, die die ersten Außenseiten 10, 11 miteinander verbinden. Dies hat jedoch den Nachteil, dass erhebliche Spannungen in derartige Verbindungen induziert werden können, wenn die beiden Plattenwärmetauschermodule A, B unterschiedliche Temperaturen aufweisen. Um ein Zerstören derartiger Verbindungen von vorneherein zu verhindern, wird erfindungsgemäß ein alternatives Verbindungsmittel 100 vorgeschlagen.

Dieses Verbindungsmittel 100 weist gemäß Fig. 1 in einer ersten Ausführungsform ein erstes flächig T-förmig ausgebildetes Verbindungselement 101 auf, mit einem ersten Schenkel 110, der sich entlang einer ersten Erstreckungsrichtung X erstreckt, die normal zu den beiden ersten Außenseiten 10 verläuft, wobei jener erste Schenkel 110 mit einem Endbereich 110aauf der zweiten Außenseite 10 des ersten Plattenwärmetauschermoduls A aufliegt und dabei mit der zweiten Außenseite 20 verschweißt ist, so dass der restliche Teil des ersten Verbindungselementes 101 entlang der ersten Erstreckungsrichtung X über die erste Außenseite 10 des ersten Plattenwärmetauschermoduls A hinaus steht und dabei vor der zweiten Außenseite 21 des zweiten Plattenwärmetauschermoduls B angeordnet ist bzw. dieser zweiten Seite 21 gegenüberliegt.

Der erste Schenkel 110 weist nun an einem dem besagten Endbereich 110a gegenüber liegenden weiteren Endbereich einen zweiten und einen dritten Schenkel 120, 130 auf, die in entgegen gesetzten Richtungen von jenem weiteren Endbereich des ersten Schenkels 110 abgehen, so dass sie entlang einer zweiten Erstreckungsrichtung Y, die senkrecht zur ersten Erstreckungsrichtung X verläuft und dabei parallel zu den beiden zweiten Außenseiten 20, 21 orientiert ist, miteinander fluchten, so dass das erste Verbindungselement 101 die besagte T-förmige Gestalt erhält. Bezogen auf einen bestimmungsgemäß angeordneten Zustand der Plattenwärmetauschermodule A, B, verläuft die zweite Erstreckungsrichtung Y entlang der Vertikalen.

Des Weiteren ist entlang der zweiten Erstreckungsrichtung Y bzw. entlang der Vertikalen oberhalb des ersten Schenkels 110 des ersten Verbindungselements 101 ein zweites rechteckförmiges Verbindungselement 102 sowie unterhalb des ersten Schenkels 110 ein drittes rechteckförmiges Verbindungselement 103 vorgesehen, wobei die beiden weiteren Verbindungselemente 102, 103, die entlang der zweiten Erstreckungsrichtung Y zu dem ersten Schenkel 110 beabstandet angeordnet sind, auf der zweiten Außenseite 21 des zweiten Plattenwärmetauschermoduls B aufliegen und mit dieser über jeweils eine Schweißverbindung verbunden sind. Dabei ragen das zweite und das dritte Verbindungselement 102, 103 mit je einem freien Endbereich entgegen der ersten Erstreckungsrichtung X über die erste Außenseite 11 des zweiten Plattenwärmetauschermoduls B hinaus, so dass die besagten freien Endebereiche vor der zweiten Außenseite 20 des ersten Plattenwärmetauschermoduls A zu liegen kommen.

Das zweite und das dritte Verbindungselement 102, 103 sind nun so bezüglich des ersten Verbindungselementes 101 angeordnet, dass dieses mit seinem zweiten Schenkel 120 das zweite Verbindungselement 102 und mit seinem dritten Schenkel 130 das dritte Verbindungselement 103 hintergreift. D.h., der zweite und der dritte Schenkel 120, 130 des ersten Verbindungselements 101 liegen jeweils an einer dem jeweiligen Schenkel 120, 130 zugewandten Anlagefläche 102a, 103a des zweiten bzw. dritten Verbindungselementes 102, 103 an, wobei jene Anlageflächen 102a, 103a der ersten Außenseite 10 des ersten Plattenwärmetauschermoduls A abgewandt sind. Hierdurch kann das erste Plattenwärmetauschermodul A entgegen der ersten Erstreckungsrichtung X nicht vom zweiten Plattenwärmetauschermodul B wegbewegt werden, da dann der zweite und der dritte Schenkel 120, 130 über jene Anlageflächen 102a, 103a gegen das jeweils zugeordnete zweite bzw. dritte Verbindungselement 102, 103 drücken und ein weitergehendes Beabstanden des ersten Plattenwärmetauschermoduls A vom zweiten Plattenwärmetauschermodul B verhindern. Auf Grund des Abstandes zwischen dem ersten Schenkel 110 des ersten Verbindungselements 101 und den beiden weiteren Verbindungselementen 102, 103 besteht jedoch die Möglichkeit, dass sich das erste Plattenwärmetauschermodul A relativ zum zweiten Plattenwärmetauschermodul B entlang der zweiten Erstreckungsrichtung Y der beiden weiteren Schenkel 120, 130 des ersten Verbindungselements 101 bewegen kann. Aufgrund dieser Bewegungsmöglichkeit können Wärmespannungen zwischen den beiden Plattenwärmetauschermodulen A, B entsprechend von vorneherein relaxiert bzw. vermieden werden.

Das erfindungsgemäße Verbindungsmittel 100 dient gemäß Figur 2 insbesondere dazu, ein Aufspreizen eines Plattenwärmetauschers zu verhindern, der aus einem ersten und einem zweiten Plattenwärmetauschermodul A, B besteht, die - abgesehen von separaten Headern H' - an einem oberen Ende über zumindest einen gemeinsamen Header H mit einem Prozessmedium beschickt werden. Bei einer temperaturbedingten Schrumpfung des gemeinsamen Headers H kann es dabei an einem gegenüber liegenden unteren Ende des Plattenwärmetauschers A, B zu einem Aufspreizen der Modulverbindung kommen, d.h., die beiden ersten Außenseiten 10, 11 bewegen sich dort voneinander weg. Dies kann durch ein erfindungsgemäßes Verbindungsmittel 100 verhindert werden, indem dieses die beiden ersten Außenseiten 10, 11 sowie in dem besagten Bereich normal zu den Außenseiten 10, 11 sowie in Z-Richtung aneinander festlegt. Vorzugsweise wird ein solches Verbindungsmittel 100 auch an (in der Figur 2 nicht sichtbaren) dritten Außenseiten der Plattenwärmetauschermodule A, B vorgesehen, die parallel zu den zweiten Außenseiten 20, 21 verlaufen.

Des Weiteren sind in der Fig. 1 beispielhaft Dimensionen für die einzelnen Verbindungselemente 101, 102, 103 in Millimetern angegeben. Dabei beträgt insbesondere ein bevorzugter Krümmungsradius einer Verrundung zwischen dem ersten und dem zweiten bzw. dem ersten und dem dritten Schenkel 110, 120 bzw. 110 bzw. 130 vorzugsweise zehn Millimeter. Diese Dimensionen sind jedoch nicht fix und können je nach Masse der Bauteile und zu erwartenden Kräften variieren.

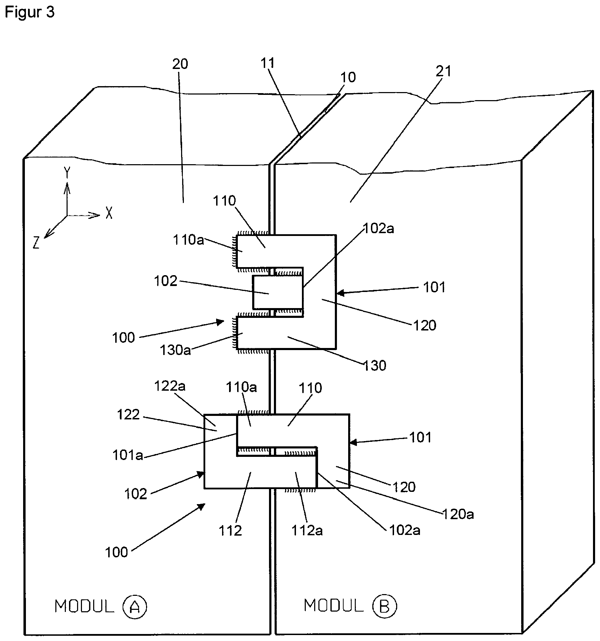

Schließlich zeigt Figur 3 zwei alternative Verbindungsmittel 100, wobei die erste Alternative (Figur 3 oben) ein zweites Verbindungselement102 vorsieht, das wie zuvor flächig rechteckförmig ausgebildet ist und über eine Schweißverbindung an der zweiten Außenseite 21 des zweiten Plattenwärmetauschermoduls B festgelegt ist, so dass es abschnittsweise über die erste Außenseite 11 des zweiten Plattenwärmetauschermoduls B hinaus ragt und mit jenem Abschnitt vor der zweiten Außenseite 20 des ersten Plattenwärmetauschermoduls A zu liegen kommt und an dieser anliegt.

Das erste Verbindungselement 101 ist dabei im Unterschied zu den Figuren 1 und 2 nicht T-förmig, sondern U-förmig ausgebildet. D.h., vom ersten Schenkel 110 des ersten Verbindungselementes 101 geht ein zweiter Schenkel 120 entgegen der zweiten Erstreckungsrichtung Y ab, der sich hinter das zweite Verbindungselement 102 erstreckt, wobei von einem Endbereich des zweiten Schenkels 120 wiederum ein dritter Schenkel 130 in Richtung auf das erste Plattenwärmetauschermodul A abgeht, so dass das erste Verbindungsmittel 101 das zweite Verbindungsmittel 102 in dessen Erstreckungsebene U-förmig umgreift. Dabei liegt das erste Verbindungselement 101 mit seinem zweiten Schenkel 120 an einer dem zweiten Schenkel 120 zugewandten Anlagefläche 102a des zweiten Verbindungselementes 102 an, wobei jene Anlagefläche 102a der ersten Außenseite 10 des ersten Plattenwärmetauschermoduls A abgewandt ist. Hierdurch kann wiederum das erste Plattenwärmetauschermodul A entgegen der ersten Erstreckungsrichtung X nicht vom zweiten Plattenwärmetauschermodul B wegbewegt werden, da dann der zweite Schenkel 120 des ersten Verbindungselementes 101 über jene Anlageflächen 102a gegen das zweite Verbindungselement 102 drückt und ein weitergehendes Beabstanden des ersten Plattenwärmetauschermoduls A vom zweiten Plattenwärmetauschermodul B verhindert. Des Weiteren sind aufgrund der U-form der erste und der dritte Schenkel 110, 130 des ersten Verbindungselementes 101 beidseitig des zweiten Verbindungselementes 102 beabstandet zu diesem angeordnet, so dass entlang der zweiten Erstreckungsrichtung Y eine gewisse Relativbewegung der beiden Plattenwärmetauschermodule A, B zueinander möglich ist. Das U-förmige erste Verbindungselement 101 ist über je einen Endbereich 110a, 130a des ersten bzw. des dritten Schenkels 110, 130 mit der zweiten Außenseite 20 des ersten Plattenwärmetauschermoduls A verschweißt. Eine Relativbewegung der Plattenwärmetauschermodule A, B in Z-Richtung kann durch die wechselseitige Überlappung mittels der Verbindungselemente 101, 102 ebenfalls verhindert werden. Gemäß einer dritten alternativen Ausführungsform (Figur 3 unten) ist sowohl das erste als auch das zweite Verbindungselement 101, 102 L-förmig ausgebildet, wobei die beiden Verbindungselemente 101, 102 des Verbindungsmittels 100 sich gegenseitig hintergreifen, um die beiden ersten Außenseiten 10, 11 normal zu den ersten Außenseiten 10, 11 aneinander festzulegen. Das erste Verbindungselement 101 weist dabei einen entlang der ersten Erstreckungsrichtung X erstreckten ersten Schenkel 110 auf, der über einen Endbereich 110a des ersten Schenkels 110 mit der zweiten Außenseite 20 des ersten Plattenwärmetauschermoduls A verschweißt ist. Der erste Schenkel 110 ragt dabei über die erste Außenseite 10 des ersten Plattenwärmetauschermoduls A hinaus und liegt abschnittsweise an der zweiten Außenseite 21 des zweiten Plattenwärmetauschermoduls B an. Von einem gegenüber liegenden weiteren Endbereich des ersten Schenkels 110 des ersten Verbindungselementes 101 geht nun zur Ausbildung der L-Form ein zweiter Schenkel 120 (entgegen der zweiten Erstreckungsrichtung Y) ab, der sich mit einem freien Endbereich 120a hinter das zweite Verbindungselement 102 erstreckt und an der zweiten Außenseite 21 des zweiten Plattenwärmetauschermoduls B anliegt. Dabei liegt der zweite Schenkel 120 des ersten Verbindungselementes 101 an einer der ersten Außenseite 10 des ersten Plattenwärmetauschermoduls A abgewandten Anlagefläche 102a des zweiten Verbindungselementes 102 an, die an einem Endbereich 112a eines ersten Schenkels 112 des zweiten Verbindungselementes 102 ausgebildet ist, über den das zweite Verbindungselement 102 an der zweiten Außenseite 21 des zweiten Plattenwärmetauschermoduls B angeschweißt ist, wobei jener erste Schenkel 112 entgegen der ersten Erstreckungsrichtung X (parallel zum ersten Schenkel 110 des ersten Verbindungselementes 101) über die erste Außenseite 11 des zweiten Plattenwärmetauschermoduls B hinaus ragt und dabei abschnittsweise an der zweiten Außenseite 20 des ersten Plattenwärmetauschermoduls A anliegt. Von einem Endbereich des ersten Schenkels 112 des zweiten Verbindungselementes 102 geht entlang der zweiten Erstreckungsrichtung Y des Weiteren ein zweiter Schenkel 122 ab, der eine L-Form des zweiten Verbindungselementes 102 bedingt, wobei nun das zweite Verbindungselement 102 mit jenem zweiten Schenkel 122 den besagten Endbereich 110a des ersten Schenkels 110 des ersten Verbindungselementes 101 hintergreift. Dieser Endbereich 110a bildet dabei ebenfalls eine Anlagefläche 101 a aus, die von der ersten Außenseite 11 des zweiten Plattenwärmetauschermoduls B abgewandt ist und zur Anlage eines (freien) Endbereiches 122a des zweiten Schenkels 122 des zweiten Verbindungselementes 102 dient. Soll nun das erste Plattenwärmetauschermodul A vom zweiten Plattenwärmetauschermodul B entlang der ersten Erstreckungsrichtung X beabstandet werden, drückt der freie Endbereich 120a des zweiten Schenkels 120 des ersten Verbindungselementes 101 gegen die zugeordnete Anlagefläche 102a des zweiten Verbindungselementes 102. In der gleichen Weise drückt der freie Endbereich 122a des zweiten Schenkels 122 des zweiten Verbindungselementes 102 gegen die zugeordnete Anlagefläche 101 a des ersten Verbindungselementes 101, so dass eine Beabstandung der beiden Plattenwärmetauschermodule A, B entlang der ersten Erstreckungsrichtung X, also voneinander weg, verhindert wird. Auch hier wird aufgrund einer wechselseitigen Überlappung der beiden Plattenwärmetauschermodule A, B durch die beiden Verbindungselemente 101, 102 eine Relativbewegung der beiden Plattenwärmetauschermodule A, B in Z-Richtung unterdrückt (siehe oben).

Durch das Anbringen eines weiteren erfindungsgemäßen Verbindungselements 100 in gleicher Weise auf den den zweiten Außenseiten 20, 21 gegenüber liegenden dritten Außenseiten bzw. Hinterseiten der Plattenwärmetauschermodule A, B (in den Figuren 1 bis 3 nicht sichtbar) wird das notwendige Widerstandsmoment des gesamten Plattenwärmetauschers in der Y-Z-Ebene gegen Biegung um die Y- und Z-Achse bzw. -Richtung gewährleistet.

**Bezugszeichenliste**

| | |
|---|---|
| A, B | Plattenwärmetauschermodule |
| 2 | Lamelle (Fin) |
| 3 | Seitenleisten (Sidebars) |
| 4 | Platten bzw. Deckplatten |
| 10, 11 | Erste Außenseiten |
| 20, 21 | Zweite Außenseiten |
| 100 | Verbindungsmittel |
| 101 | Erstes Verbindungselement |
| 102 | Zweites Verbindungselement |
| 103 | Drittes Verbindungselement |
| 110 | Erster Schenkel |
| 120 | Zweiter Schenkel |
| 120a, 130a, 110a, 112a, 120a, 122a | Endbereich |
| 130 | Dritter Schenkel |
| 101a, 102a, 103a | Anlagefläche |
| H, H' | Header |
| X | Erste Erstreckungsrichtung |
| Y | Zweite Erstreckungsrichtung |

## Patentansprüche

1. Plattenwärmetauscher, mit:
einem ersten und einem zweiten Plattenwärmetauschermodul (A, B), die über ein Verbindungsmittel (100) miteinander verbunden sind, wobei die beiden Plattenwärmetauschermodule (A, B) jeweils eine erste Außenseite (10,11) aufweisen, wobei die beiden Außenseiten (10,11) einander zugewandt sind, und wobei die beiden Plattenwärmetauschermodule (A, B) jeweils eine von der ersten Außenseite (10,11) abgehende zweite Außenseite (20,21) aufweisen,
**dadurch gekennzeichnet,**
**dass** das Verbindungsmittel (100) zumindest ein an der zweiten Außenseite (20) des ersten Plattenwärmetauschermoduls (A) befestigtes erstes Verbindungselement (101) sowie ein an der zweiten Außenseite (21) des zweiten Plattenwärmetauschermoduls (B) befestigtes zweites Verbindungselement (102) aufweist, wobei das erste Verbindungselement (101) das zweite Verbindungselement (102) hintergreift, sodass die beiden Plattenwärmetauschermodule (A, B) normal zu ihren ersten Außenflächen (10,11) aneinander festgelegt sind und eine seitliche Ausgleichsbewegung zwischen den Plattenwärmetauschermodulen (A, B) zum Ausgleich von Wärmespannungen möglich ist.

2. Plattenwärmetauscher nach Anspruch 1, **dadurch gekennzeichnet, dass** das erste Verbindungselement (101) einen ersten Schenkel (110) aufweist, der entlang einer ersten Erstreckungsrichtung (X), die insbesondere senkrecht zur ersten Außenseite (10) des ersten Plattenwärmetauschermoduls (A) orientiert ist, über die erste Außenseite (10) des ersten Plattenwärmetauschermoduls (A) hinaus steht, so dass der erste Schenkel (110) abschnittsweise vor der zweite Außenseite (21) des zweiten Plattenwärmetauschermoduls (B) angeordnet ist und insbesondere an dieser anliegt, und wobei insbesondere das zweite Verbindungselement (102) entgegen der ersten Erstreckungsrichtung (X) über die erste Außenseite (11) des zweiten Plattenwärmetauschermoduls (B) hinaus steht, so dass das zweite Verbindungselement (102) abschnittsweise vor der zweiten Außenseite (20) des ersten Plattenwärmetauschermoduls (A) angeordnet ist und insbesondere an dieser anliegt.

3. Plattenwärmetauscher nach Anspruch 2, **dadurch gekennzeichnet, dass** das erste Verbindungselement (101) zum Hintergreifen des zweiten Verbindungselementes (102) einen zweiten Schenkel (120) aufweist, der vor der zweiten Außenseite (21) des zweiten Plattenwärmetauschermoduls (B) angeordnet ist und insbesondere an dieser anliegt, und der entlang einer quer zur ersten Erstreckungsrichtung (X) orientierten zweiten Erstreckungsrichtung (Y) vom ersten Schenkel (110) abgeht und sich hinter das zweite Verbindungselement (102) erstreckt, so dass sich insbesondere die beiden Plattenwärmetauschermodule (A, B) entlang der zweiten Erstreckungsrichtung (Y) relativ zueinander bewegen können.

4. Plattenwärmetauscher nach Anspruch 3, **dadurch gekennzeichnet, dass** sich der zweite Schenkel (120) mit einem freien Endbereich (120a) des zweiten Schenkels (120) hinter das zweite Verbindungselement (102) erstreckt.

5. Plattenwärmetauscher nach einem der vorhergehenden Ansprüche, **dadurch gekennzeichnet, dass** das Verbindungsmittel (100) ein an der zweiten Außenseite (21) des zweiten Plattenwärmetauschermoduls (B) befestigtes drittes Verbindungselement (103) aufweist, wobei das erste Verbindungselement (101) auch das dritte Verbindungselement (103) hintergreift, und wobei insbesondere das dritte Verbindungselement (103) entgegen der ersten Erstreckungsrichtung (X) über die erste Außenseite (11) des zweiten Plattenwärmetauschermoduls (B) hinaus steht, so dass das dritte Verbindungselement (102) abschnittsweise vor der zweiten Außenseite (20) des ersten Plattenwärmetauschermoduls (A) angeordnet ist und insbesondere an dieser anliegt.

6. Plattenwärmetauscher nach den Ansprüchen 2, 3 und 5, **dadurch gekennzeichnet, dass** das erste Verbindungselement (101) zum Hintergreifen des dritten Verbindungselementes (103) einen dritten Schenkel (130) aufweist, der entgegen gesetzt zum zweiten Schenkel (120) vom ersten Schenkel (110) abgeht und vor der zweiten Außenseite (21) des zweiten Plattenwärmetauschermoduls (B) angeordnet ist und insbesondere an dieser anliegt, wobei sich der dritte Schenkel (130) mit einem freien Endbereich hinter das drittes Verbindungselement (103) erstreckt, so dass sich die beiden Plattenwärmetauschermodule (A, B) entlang der zweiten Erstreckungsrichtung (Y) relativ zueinander bewegen können.

7. Plattenwärmetauscher nach Anspruch 6, **dadurch gekennzeichnet, dass** der zweite Schenkel (120) und der dritte Schenkel (130) entlang der zweiten Erstreckungsrichtung (Y) miteinander fluchten, so dass das erste Verbindungselement (101) insbesondere T-förmig ausgebildet ist.

8. Plattenwärmetauscher nach den Ansprüchen 2 und 5, **dadurch gekennzeichnet, dass** der erste Schenkel (110) entlang der zweiten Erstreckungsrichtung (Y) zwischen dem zweiten und dem dritten Verbindungselement (102, 103) angeordnet ist, wobei der erste Schenkel (110) entlang der zweiten Erstreckungsrichtung (Y) zu dem zweiten und dem dritten Verbindungselement (102, 103) beabstandet angeordnet ist, so dass insbesondere das zweite und das dritte Verbindungselement (102, 103) je einen Anschlag für den ersten Schenkel (110) des ersten Verbindungselementes (101) definieren, wobei insbesondere jene Anschläge eine Bewegung der beiden Plattenwärmetauschermodule (A, B) relativ zueinander entlang der zweiten Erstreckungsrichtung (Y) begrenzen.

9. Plattenwärmetauscher nach Anspruch 3, **dadurch gekennzeichnet, dass** das erste Verbindungselement (101) einen dritten Schenkel (130) aufweist, der von einem Endbereich des zweiten Schenkels (120) abgeht, so dass das erste Verbindungselement (101) das zweite Verbindungselement (102) umgreift, wobei insbesondere der dritte Schenkel (130) parallel zum ersten Schenkel (110) verläuft, und wobei insbesondere der dritte Schenkel (130) entlang der ersten Erstreckungsrichtung (X) über die erste Außenseite (10) des ersten Plattenwärmetauschermoduls (A) hinaus steht, so dass der dritte Schenkel (130) abschnittsweise vor der zweiten Außenseite (21) des zweiten Plattenwärmetauschermoduls (B) angeordnet ist und insbesondere an dieser anliegt, und wobei insbesondere das erste Verbindungselement (101) über einen Endbereich (110a) des ersten Schenkels (110) sowie über einen Endbereich (130a) des dritten Schenkels (130) an der zweiten Außenseite (20) des ersten Plattenwärmetauschermoduls (A) befestigt ist.

10. Plattenwärmetauscher nach einem der Ansprüche 1 bis 4, **dadurch gekennzeichnet, dass** das erste Verbindungselement (101) L-förmig ausgebildet ist, wobei insbesondere das erste Verbindungselement (101) über einen Endbereich (110a) des ersten Schenkels (110) des ersten Verbindungselementes (101) an der zweiten Außenseite des ersten Plattenwärmetauschermoduls (A) befestigt ist.

11. Plattenwärmetauscher nach Anspruch 2 oder 10, **dadurch gekennzeichnet, dass** das zweite Verbindungselement (102) einen ersten Schenkel (112) aufweist, der entgegen der ersten Erstreckungsrichtung (X), über die erste Außenseite (11) des zweiten Plattenwärmetauschermoduls (A) hinaus steht, so dass der erste Schenkel (112) des zweiten Verbindungselementes (102) abschnittsweise vor der zweiten Außenseite (20) des ersten Plattenwärmetauschermoduls (A) angeordnet ist und insbesondere an dieser anliegt, und wobei insbesondere das zweite Verbindungselement (102) über einen Endbereich (112a) der ersten Schenkels (112) des zweiten Verbindungselementes (102) an der zweiten Außenseite (21) des zweiten Plattenwärmetauschermoduls (B) befestigt ist.

12. Plattenwärmetauscher nach Anspruch 11, **dadurch gekennzeichnet, dass** das zweite Verbindungselement (102) zum Hintergreifen des ersten Verbindungselementes (101) einen zweiten Schenkel (122) aufweist, so dass das zweite Verbindungselement (102) insbesondere L-förmig ausgebildet ist, wobei insbesondere jener zweite Schenkel (122) des zweiten Verbindungselementes (102) vor der zweiten Außenseite (20) des ersten Plattenwärmetauschermoduls (A) angeordnet ist und insbesondere an dieser anliegt, und wobei insbesondere jener zweite Schenkel (122) des zweiten Verbindungselements (102) entlang der zweiten Erstreckungsrichtung (Y) vom ersten Schenkel (112) des zweiten Verbindungselementes (102) abgeht und sich hinter das erste Verbindungselement (101) erstreckt, so dass sich insbesondere die beiden Plattenwärmetauschermodule (A, B) entlang der zweiten Erstreckungsrichtung (Y) relativ zueinander bewegen können.

13. Plattenwärmetauscher nach einem der vorhergehenden Ansprüche, **dadurch gekennzeichnet, dass** das erste Verbindungselement (10) über eine Schweißverbindung an der zweiten Außenseite (20) des ersten Plattenwärmetauschermoduls (A) befestigt ist und insbesondere dass das zweite und/oder das dritte Verbindungselement (102, 103) jeweils über eine Schweißverbindung an der zweiten Außenseite (21) des zweiten Plattenwärmetauschermoduls (B) befestigt sind.

14. Plattenwärmetauscher nach einem der vorhergehenden Ansprüche, **dadurch gekennzeichnet, dass** die erste Außenseite (10) des ersten Plattenwärmetauschermoduls (A) durch eine Deckplatte des ersten Plattenwärmetauschermoduls (A) gebildet ist und/oder dass die erste Außenseite (11) des zweiten Plattenwärmetauschermoduls (B) durch eine Deckplatte des zweiten Plattenwärmetauschermoduls (B) gebildet ist, und wobei insbesondere die beiden Plattenwärmetauschermodule (A, B) über einen gemeinsamen Header miteinander verbunden sind.

15. Verfahren zum Reparieren oder Nachrüsten eines Plattenwärmetauschers, der ein erstes und ein zweites Plattenwärmetauschermodul (A, B) aufweist, wobei die beiden Plattenwärmetauschermodule (A, B) jeweils eine erste Außenseite (10,11) aufweisen, wobei die beiden Außenseiten (10,11) einander zugewandt sind, insbesondere aneinander anliegen, und wobei die beiden Plattenwärmetauschermodule (A, B) jeweils eine von der ersten Außenseite (10,11) abgehende zweite Außenseite (20,21) aufweisen,
**dadurch gekennzeichnet, dass**
an der zweiten Außenseite (20) des ersten Plattenwärmetauschermoduls (A) ein erstes Verbindungselement (101) eines Verbindungsmittels (100) sowie an der zweiten Außenseite (21) des zweiten Plattenwärmetauschermoduls (B) ein zweites Verbindungselement (102) des Verbindungsmittels (100) angebracht werden, wobei das erste Verbindungselement (101) das zweite Verbindungselement (102) hintergreift, sodass die beiden Plattenwärmetauschermodule (A, B) normal zu ihren ersten Außenflächen (10,11) aneinander festgelegt sind und eine seitliche Ausgleichsbewegung zwischen den Plattenwärmetauschermodulen (A, B) zum Ausgleich von Wärmespannungen möglich ist.

## Claims

1. Plate heat exchanger, comprising:
a first and a second plate heat exchanger module (A, B) which are connected to each other via a connecting means (100), wherein the two plate heat exchanger modules (A, B) each have a first outer side (10, 11), wherein the two outer sides (10, 11) face each other, and wherein the two plate heat exchanger modules (A, B) each have a second outer side (20, 21) branching off from the first outer side (10, 11),
**characterized in that**
the connecting means (100) has at least one first connecting element (101) fastened to the second outer side (20) of the first plate heat exchanger module (A) and a second connecting element (102) fastened to the second outer side (21) of the second plate heat exchanger module (B), wherein the first connecting element (101) engages behind the second connecting element (102), and therefore the two plate heat exchanger modules (A, B) are fixed on each other normally to the first outer surfaces (10, 11) thereof, and a lateral compensating movement between the plate heat exchanger modules (A, B) is possible in order to compensate for thermal stresses.

2. Plate heat exchanger according to Claim 1, **characterized in that** the first connecting element (101) has a first limb (110) which, along a first direction of extension (X) which is oriented in particular perpendicularly to the first outer side (10) of the first plate heat exchanger module (A), protrudes beyond the first outer side (10) of the first plate heat exchanger module (A) such that the first limb (110) is partially arranged in front of the second outer side (21) of the second plate heat exchanger module (B) and in particular bears against said outer side, and wherein in particular the second connecting element (102) protrudes beyond the first outer side (11) of the second plate heat exchanger module (B) counter to the first direction of extension (X) such that the second connecting element (102) is partially arranged in front of the second outer side (20) of the first plate heat exchanger module (A) and in particular bears against said outer side.

3. Plate heat exchanger according to Claim 2, **characterized in that**, for the engaging behind the second connecting element (102), the first connecting element (101) has a second limb (120) which is arranged in front of the second outer side (21) of the second plate heat exchanger module (B) and in particular bears against said outer side, and which branches off from the first limb (110) along a second direction of extension (Y) oriented transversely with respect to the first direction of extension (X), and extends behind the second connecting element (102), and therefore in particular the two plate heat exchanger modules (A, B) can move relative to each other along the second direction of extension (Y).

4. Plate heat exchanger according to Claim 3, **characterized in that** the second limb (120) extends with a free end region (120a) of the second limb (120) behind the second connecting element (102).

5. Plate heat exchanger according to one of the preceding claims, **characterized in that** the connecting means (100) has a third connecting element (103) fastened to the second outer side (21) of the second plate heat exchanger module (B), wherein the first connecting element (101) also engages behind the third connecting element (103), and wherein in particular the third connecting element (103) protrudes beyond the first outer side (11) of the second plate heat exchanger module (B) counter to the first direction of extension (X) such that the third connecting element (102) is partially arranged in front of the second outer side (20) of the first plate heat exchanger module (A) and in particular bears against said outer side.

6. Plate heat exchanger according to Claims 2, 3 and 5, **characterized in that**, for the engaging behind the third connecting element (103), the first connecting element (101) has a third limb (130) which branches off from the first limb (110) in the opposite direction to the second limb (120) and is arranged in front of the second outer side (21) of the second plate heat exchanger module (B) and in particular bears against said outer side, wherein the third limb (130) extends with a free end region behind the third connecting element (103), and therefore the two plate heat exchanger modules (A, B) can move relative to each other along the second direction of extension (Y).

7. Plate heat exchanger according to Claim 6, **characterized in that** the second limb (120) and the third limb (130) are aligned with each other along the second direction of extension (Y), and therefore the first connecting element (101) is in particular of T-shaped design.

8. Plate heat exchanger according to Claims 2 and 5, **characterized in that** the first limb (110) is arranged between the second and the third connecting element (102, 103) along the second direction of extension (Y), wherein the first limb (110) is arranged spaced apart from the second and the third connecting element (102, 103) along the second direction of extension (Y), and therefore in particular the second and the third connecting element (102, 103) in each case define a stop for the first limb (110) of the first connecting element (101), wherein in particular said stops limit a movement of the two plate heat exchanger modules (A, B) relative to each other along the second direction of extension (Y).

9. Plate heat exchanger according to Claim 3, **characterized in that** the first connecting element (101) has a third limb (130) which branches off from an end region of the second limb (120) such that the first connecting element (101) engages around the second connecting element (102), wherein in particular the third limb (130) runs parallel to the first limb (110), and wherein in particular the third limb (130) protrudes beyond the first outer side (10) of the first plate heat exchanger module (A) along the first direction of extension (X) such that the third limb (130) is partially arranged in front of the second outer side (21) of the second plate heat exchanger module (B) and in particular bears against said outer side, and wherein in particular the first connecting element (101) is fastened to the second outer side (20) of the first plate heat exchanger module (A) via an end region (110a) of the first limb (110) and via an end region (130a) of the third limb (130).

10. Plate heat exchanger according to one of Claims 1 to 4, **characterized in that** the first connecting element (101) is of L-shaped design, wherein in particular the first connecting element (101) is fastened to the second outer side of the first plate heat exchanger module (A) via an end region (110a) of the first limb (110) of the first connecting element (101).

11. Plate heat exchanger according to Claim 2 or 10, **characterized in that** the second connecting element (102) has a first limb (112) which protrudes beyond the first outer side (11) of the second plate heat exchanger module (A) counter to the first direction of extension (X) such that the first limb (112) of the second connecting element (102) is partially arranged in front of the second outer side (20) of the first plate heat exchanger module (A) and in particular bears against said outer side, and wherein in particular the second connecting element (102) is fastened to the second outer side (21) of the second plate heat exchanger module (B) via an end region (112a) of the first limb (112) of the second connecting element (102).

12. Plate heat exchanger according to Claim 11, **characterized in that**, for engaging behind the first connecting element (101), the second connecting element (102) has a second limb (122), and therefore the second connecting element (102) is in particular of L-shaped design, wherein in particular said second limb (122) of the second connecting element (102) is arranged in front of the second outer side (20) of the first plate heat exchanger module (A) and in particular bears against said outer side, and wherein in particular said second limb (122) of the second connecting element (102) branches off from the first limb (112) of the second connecting element (102) along the second direction of extension (Y) and extends behind the first connecting element (101), and therefore in particular the two plate heat exchanger modules (A, B) can move relative to each other along the second direction of extension (Y).

13. Plate heat exchanger according to one of the preceding claims, **characterized in that** the first connecting element (10) is fastened to the second outer side (20) of the first plate heat exchanger module (A) via a weld, and in particular **in that** the second and/or the third connecting element (102, 103) are fastened to the second outer side (21) of the second plate heat exchanger module (B) in each case via a weld.

14. Plate heat exchanger according to one of the preceding claims, **characterized in that** the first outer side (10) of the first plate heat exchanger module (A) is formed by a cover plate of the first plate heat exchanger module (A), and/or **in that** the first outer side (11) of the second plate heat exchanger module (B) is formed by a cover plate of the second plate heat exchanger module (B), and wherein in particular the two plate heat exchanger modules (A, B) are connected to each other via a common header.

15. Method for repairing or retrofitting a plate heat exchanger which has a first and a second plate heat exchanger module (A, B), wherein the two plate heat exchanger modules (A, B) each have a first outer side (10, 11), wherein the two outer sides (10, 11) face each other, in particular bear against each other, and wherein the two plate heat exchanger modules (A, B) each have a second outer side (20, 21) branching off from the first outer side (10, 11),
**characterized in that**
a first connecting element (101) of a connecting means (100) is fitted on the second outer side (20) of the first plate heat exchanger module (A) and a second connecting element (102) of the connecting means (100) is fitted on the second outer side (21) of the second plate heat exchanger module (B), wherein the first connecting element (101) engages behind the second connecting element (102), and therefore the two plate heat exchanger modules (A, B) are fixed on each other normally to the first outer surfaces (10, 11) thereof, and a lateral compensating movement between the plate heat exchanger modules (A, B) is possible in order to compensate for thermal stresses.

## Revendications

1. Échangeur thermique à plaques, comprenant :
un premier et un deuxième module d'échangeur thermique à plaques (A, B), qui sont reliés l'un à l'autre par le biais d'un moyen de liaison (100), les deux modules d'échangeur thermique à plaques (A, B) présentant chacun un premier côté extérieur (10, 11), les deux côtés extérieurs (10, 11) étant tournés l'un vers l'autre, et les deux modules d'échangeur thermique à plaques (A, B) présentant chacun un deuxième côté extérieur (20, 21) partant du premier côté extérieur (10, 11),
**caractérisé en ce que**
le moyen de liaison (100) présente au moins un premier élément de liaison (101) fixé au deuxième côté extérieur (20) du premier module d'échangeur thermique à plaques (A) ainsi qu'un deuxième élément de liaison (102) fixé au deuxième côté extérieur (21) du deuxième module d'échangeur thermique à plaques (B), le premier élément de liaison (101) venant en prise par l'arrière avec le deuxième élément de liaison (102) de telle sorte que les deux modules d'échangeur thermique à plaques (A, B) soient fixés l'un à l'autre perpendiculairement à leurs premières surfaces extérieures (10, 11) et qu'un déplacement de compensation latéral entre les modules d'échangeur thermique à plaques (A, B) pour compenser les contraintes thermiques soit possible.

2. Échangeur thermique à plaques selon la revendication 1, **caractérisé en ce que** le premier élément de liaison (101) présente une première branche (110) qui s'étend le long d'une première direction d'étendue (X) qui est orientée notamment perpendiculairement au premier côté extérieur (10) du premier module d'échangeur thermique à plaques (A), au-delà du premier côté extérieur (10) du premier module d'échangeur thermique à plaques (A) de telle sorte que la première branche (10) soit disposée en partie avant le deuxième côté extérieur (21) du deuxième module d'échangeur thermique à plaques (B) et s'applique notamment contre ce deuxième côté extérieur, et notamment le deuxième élément de liaison (102) s'étendant dans le sens opposé à la première direction d'étendue (X) au-delà du premier côté extérieur (11) du deuxième module d'échangeur thermique à plaques (B), de telle sorte que le deuxième élément de liaison (102) soit disposé en partie avant le deuxième côté extérieur (20) du premier module d'échangeur thermique à plaques (A) et notamment s'applique contre ce deuxième côté extérieur.

3. Échangeur thermique à plaques selon la revendication 2, **caractérisé en ce que** le premier élément de liaison (101) présente une deuxième branche (120) destinée à venir en prise par l'arrière avec le deuxième élément de liaison (102), laquelle est disposée avant le deuxième côté extérieur (21) du deuxième module d'échangeur thermique à plaques (B) et s'applique notamment contre ce deuxième côté extérieur, et part de la première branche (110) le long d'une deuxième direction d'étendue (Y) orientée transversalement par rapport à la première direction d'étendue (X) et s'étend derrière le deuxième élément de liaison (102) de telle sorte que notamment les deux modules d'échangeur thermique à plaques (A, B) puissent se déplacer l'un par rapport à l'autre le long de la deuxième direction d'étendue (Y).

4. Échangeur thermique à plaques selon la revendication 3, **caractérisé en ce que** la deuxième branche (120) s'étend avec une région d'extrémité libre (120a) de la deuxième branche (120) derrière le deuxième élément de liaison (102).

5. Échangeur thermique à plaques selon l'une quelconque des revendications précédentes, **caractérisé en ce que** le moyen de liaison (100) présente un troisième élément de liaison (103) fixé au deuxième côté extérieur (21) du deuxième module d'échangeur thermique à plaques (B), le premier élément de liaison (101) venant également en prise par l'arrière avec le troisième élément de liaison (103), et notamment le troisième élément de liaison (103) s'étendant au-delà du premier côté extérieur (11) du deuxième module d'échangeur thermique à plaques (B) dans le sens opposé à la première direction d'étendue (X) de telle sorte que le troisième élément de liaison (102) soit disposé en partie avant le deuxième côté extérieur (20) du premier module d'échangeur thermique à plaques (A) et notamment s'applique contre ce deuxième côté extérieur.

6. Échangeur thermique à plaques selon la revendication 2, 3 et 5, **caractérisé en ce que** le premier élément de liaison (101) présente une troisième branche (130) destinée à venir en prise par l'arrière avec le troisième élément de liaison (103), laquelle part de la première branche (110) à l'opposé de la deuxième branche (120) et est disposée avant le deuxième côté extérieur (21) du deuxième module d'échangeur thermique à plaques (B) et notamment s'applique contre ce deuxième côté extérieur, la troisième branche (130) s'étendant avec une région d'extrémité libre derrière le troisième élément de liaison (103) de telle sorte que les deux modules d'échangeur thermique à plaques (A, B) puissent se déplacer l'un par rapport à l'autre le long de la deuxième direction d'étendue (Y).

7. Échangeur thermique à plaques selon la revendication 6, **caractérisé en ce que** la deuxième branche (120) et la troisième branche (130) sont alignées l'une avec l'autre le long de la deuxième direction d'étendue (Y), de telle sorte que le premier élément de liaison (101) soit réalisé notamment en forme de T.

8. Échangeur thermique à plaques selon les revendications 2 et 5, **caractérisé en ce que** la première branche (110) est disposée le long de la deuxième direction d'étendue (Y) entre le deuxième et le troisième élément de liaison (102, 103), la première branche (110) étant disposée le long de la deuxième direction d'étendue (Y) à distance du deuxième et du troisième élément de liaison (102, 103), de telle sorte que notamment le deuxième et le troisième élément de liaison (102, 103) définissent à chaque fois une butée pour la première branche (110) du premier élément de liaison (101), chacune des butées limitant notamment un déplacement des deux modules d'échangeur thermique à plaques (A, B) l'un par rapport à l'autre le long de la deuxième direction d'étendue (Y).

9. Échangeur thermique à plaques selon la revendication 3, **caractérisé en ce que** le premier élément de liaison (101) présente une troisième branche (130) qui part d'une région d'extrémité de la deuxième branche (120) de telle sorte que le premier élément de liaison (101) vienne en prise autour du deuxième élément de liaison (102), la troisième branche (130) s'étendant notamment parallèlement à la première branche (110) et notamment la troisième branche (130) s'étendant le long de la première direction d'étendue (X) au-delà du premier côté extérieur (10) du premier module d'échangeur thermique à plaques (A) de telle sorte que la troisième branche (130) soit disposée en partie avant le deuxième côté extérieur (21) du deuxième module d'échangeur thermique à plaques (B) et notamment s'applique contre ce deuxième côté extérieur, et notamment le premier élément de liaison (101) étant fixé par le biais d'une région d'extrémité (110a) de la première branche (110) ainsi que par le biais d'une région d'extrémité (130a) de la troisième branche (130) au deuxième côté extérieur (20) du premier module d'échangeur thermique à plaques (A).

10. Échangeur thermique à plaques selon l'une quelconque des revendications 1 à 4, **caractérisé en ce que** le premier élément de liaison (101) est réalisé en forme de L, le premier élément de liaison (101) étant notamment fixé par le biais d'une région d'extrémité (110a) de la première branche (110) du premier élément de liaison (101) au deuxième côté extérieur du premier module d'échangeur thermique à plaques (A).

11. Échangeur thermique à plaques selon la revendication 2 ou 10, **caractérisé en ce que** le deuxième élément de liaison (102) présente une première branche (112) qui s'étend dans le sens opposé à la première direction d'étendue (X) au-delà du premier côté extérieur (11) du deuxième module d'échangeur thermique à plaques (A), de sorte que la première branche (112) du deuxième élément de liaison (102) soit disposée en partie avant le deuxième côté extérieur (20) du premier module d'échangeur thermique à plaques (A), et s'applique notamment contre ce deuxième côté extérieur, et notamment le deuxième élément de liaison (102) étant fixé par le biais d'une région d'extrémité (112a) de la première branche (112) du deuxième élément de liaison (102) au deuxième côté extérieur (21) du deuxième module d'échangeur thermique à plaques (B).

12. Échangeur thermique à plaques selon la revendication 11, **caractérisé en ce que** le deuxième élément de liaison (102) présente une deuxième branche (122) pour venir en prise par l'arrière avec le premier élément de liaison (101), de telle sorte que le deuxième élément de liaison (102) soit notamment réalisé en forme de L, chaque deuxième branche (122) du deuxième élément de liaison (102) étant notamment disposée avant le deuxième côté extérieur (20) du premier module d'échangeur thermique à plaques (A), et s'applique notamment contre ce deuxième côté extérieur, et notamment chaque deuxième branche (122) du deuxième élément de liaison (102) partant le long de la deuxième direction d'étendue (Y) depuis la première branche (112) du deuxième élément de liaison (102) et s'étendant derrière le premier élément de liaison (101), de telle sorte que les deux modules d'échangeur thermique à plaques (A, B) puissent notamment se déplacer l'un par rapport à l'autre le long de la deuxième direction d'étendue (Y).

13. Échangeur thermique à plaques selon l'une quelconque des revendications précédentes, **caractérisé en ce que** le premier élément de liaison (10) est fixé par le biais d'une liaison soudée au deuxième côté extérieur (20) du premier module d'échangeur thermique à plaques (A) et notamment **en ce que** le deuxième et/ou le troisième élément de liaison (102, 103) sont à chaque fois fixés par le biais d'une liaison soudée au deuxième côté extérieur (21) du deuxième module d'échangeur thermique à plaques (B).

14. Échangeur thermique à plaques selon l'une quelconque des revendications précédentes, **caractérisé en ce que** le premier côté extérieur (10) du premier module d'échangeur thermique à plaques (A) est formé par une plaque de recouvrement du premier module d'échangeur thermique à plaques (A) et/ou **en ce que** le premier côté extérieur (11) du deuxième module d'échangeur thermique à plaques (B) est formé par une plaque de recouvrement du deuxième module d'échangeur thermique à plaques (B), et notamment les deux modules d'échangeur thermique à plaques (A, B) étant connectés l'un à l'autre par le biais d'un collecteur commun.

15. Procédé pour réparer ou adapter un échangeur thermique à plaques qui présente un premier et un deuxième module d'échangeur thermique à plaques (A, B), les deux modules d'échangeur thermique à plaques (A, B) présentant chaque fois un premier côté extérieur (10, 11), les deux côtés extérieurs (10, 11) étant tournés l'un vers l'autre, en particulier s'appliquant l'un contre l'autre, et
les deux modules d'échangeur thermique à plaques (A, B) présentant à chaque fois un deuxième côté extérieur (20, 21) partant du premier côté extérieur (10, 11),
**caractérisé en ce**
**qu'**un premier élément de liaison (101) d'un moyen de liaison (100) est monté au niveau du deuxième côté extérieur (20) du premier module d'échangeur thermique à plaques (A) et un deuxième élément de liaison (102) du moyen de liaison (100) est monté au niveau du deuxième côté extérieur (21) du deuxième module d'échangeur thermique à plaques (B), le premier élément de liaison (101) venant en prise par l'arrière avec le deuxième élément de liaison (102) de telle sorte que les deux modules d'échangeur thermique à plaques (A, B) soient fixés l'un contre l'autre perpendiculairement à leurs premières surfaces extérieures (10, 11) et qu'un déplacement de compensation latéral entre les modules d'échangeur thermique à plaques (A, B) pour compenser les contraintes thermiques soit possible.
